# EUROPEAN PATENT SPECIFICATION

(11) **EP 1 557 356 B1**
(45) Date of publication and mention of the grant of the patent: **14.12.2005**
(21) Application number: 04425043.9
(22) Date of filing: 26.01.2004
(51) Int. Cl.: B64D 27/02, F02K 7/075, B64D 27/18

(54) **Aircraft, particularly small aircraft, having a propulsion system including a plurality of pulse detonation engines (PDEs)**
Flugzeug mit einem Antriebssystem bestehend aus mehreren pulsierten Detonationskraftmaschinen
Aéronef avec un système de propulsion incluant plusieurs moteurs à détonation pulsée

(43) Date of publication of application: 27.07.2005
(73) Proprietor: C.R.F. Società Consortile per Azioni, 10043 Orbassano (TO) (IT)
(72) Inventor: Perlo, Piero, 12048 Sommariva Bosco Cuneo (IT); Golub, Victor, Strada Torino 50 10043 Orbassano Torino (IT); Kotelnikov, Andrei, Strada Torino 50 10043 Orbassano Torino (IT)
(74) Representative: Notaro, Giancarlo

(56) References cited:
- FR-A- 2 166 324
- GB-A- 2 383 823
- RU-C- 2 130 407
- US-A- 2 377 247
- US-A- 2 756 008
- US-A- 2 972 862

## Description

The present invention is referred in general to the aircraft technique and in particular to small aircrafts, either of the manned or unmanned type, provided with a propulsion system including a plurality of Pulse Detonation Engines.

Since the 1940s, a research has been developed for application of the detonation regime of combustion in various fields. The advantage of a combustion under a detonation regime over classical combustion is the high rate of the energy release. It allows designing of the propulsion engines with a very high power density. In Pulse Detonation Devices (PDDs) a constant volume, thermodynamic cycle is effectively realized.

The most interesting development of the PDDs is constituted by the Pulse Detonation Engines (PDEs). The advantages of PDEs over conventional propulsion engines (turbo, ramjet, piston engines) are engine efficiency, simplicity of construction, small dimensions and reduced weight and capability to work efficiently both at low and supersonic speeds. PDEs have been disclosed for instance by Nicholls J.A., Wilkinson H.R., Morrison R.B. (1957), in "Intermittent detonation as a thrust-producing mechanism", Jet Propulsion 27 (5): 534-41, and by Eidelman S., Grossman W. (1992) in "Pulsed detonation engine, Experimental and theoretical Review, AIAA paper 92-3168.

The basic PDE set-up is a simple detonation tube open at one end (see also Wilson D.R., Lu F.K., Stuessy W.S. (1999) "Gaseous detonation phenomena with shock and arc initiation", I,: Proc. 21^{st} Int Symp Shock Waves 421-425). At the closed end of the tube there are fuel and oxygen injectors. After filling the detonation chamber by a detonable mixture, the detonation can be initiated in two different positions: at the open or the closed end. In any case, the pushing of the detonation products on the closed end (the thrust wall) produces the thrust.

The application of PDEs to the propulsion of aircrafts is known for example from document RU 2130407. published on 20,05.1999 (see the preamble of claim 1).

The object of the present invention is that of providing an aircraft, particularly a small aircraft, either of the manned or unmanned type, which is to flight with a relatively reduced load and at relatively low speeds, using the combustion under detonation regime with a high efficiency and particularly with a very reduced fuel consumption.

A further object of the invention is that of providing an aircraft which has the ability of combining two regimes of flight: vertical, or sub-vertical, take-off and landing and cruising regime.

Yet another object of the invention is that of providing an aircraft of the above indicated type with a high flight stability and high maneuverability.

In view of achieving these and further objects, the aircraft according to the invention has the features indicated in the annexed claim 1.

Further preferred features of the aircraft according to the invention are indicated in the dependent claims.

An essential feature of the aircraft according to the invention lies in that it is provided with groups of PDEs formed by detonation tubes which are arranged within the wings of the aircraft. To this end, the detonation tubes provided on the aircraft preferably have a curved configuration, so that they can follow a curved or inclined profile of the wing leading edge, when viewed from above.

A further basic feature of the invention lies in that the various detonation tubes provided on the aircraft can be controlled independently from each other or in groups, and therefore can be actuated selectively, so that the value of the thrust can be controlled. The ability of fine-tuning of the thrust also gives an opportunity to obtain extra stability and manoeuvrability of the aircraft especially at vertical or sub-vertical take-off/landing and at transition to cruising regime.

A further important feature of the invention lies in that the nozzles of the various detonation tubes are oriented in different directions so that they can be used selectively at the various flight regimes, and particularly in vertical or sub-vertical take-off/landing and at cruising regime.

The arrangement of the detonation tubes within the wings of the aircraft produces a lower fuel consumption by virtue of the reduction of the aerodynamic drag. The propulsion system does not have an exposed cross-section area, since it is located within the wings. As a result, the value of front thrust, intended as the ratio of the thrust to the value of maximum exposed engine cross-section area in this case is extremely high.

A further important feature of invention lies in that the nozzles of the various detonation tubes are offset with respect to each other. The spacing of the detonation tubes from each other along the horizontal direction and the vertical direction and the offset of the nozzles relative to each other along the longitudinal direction of the tubes are selected at design stage to obtain a minimum level of noise by exploiting the interference of acoustic waves caused by the detonations. Further parameters which can be determined to this end are the diameter of the tubes, which may also be different for different tubes, as well as the angles which the longitudinal direction of each nozzle defines with respect to a reference system.

Further features and advantages of the invention will become apparent from the description which follows with reference to the annexed drawings, given purely by way of non limiting example, in which:

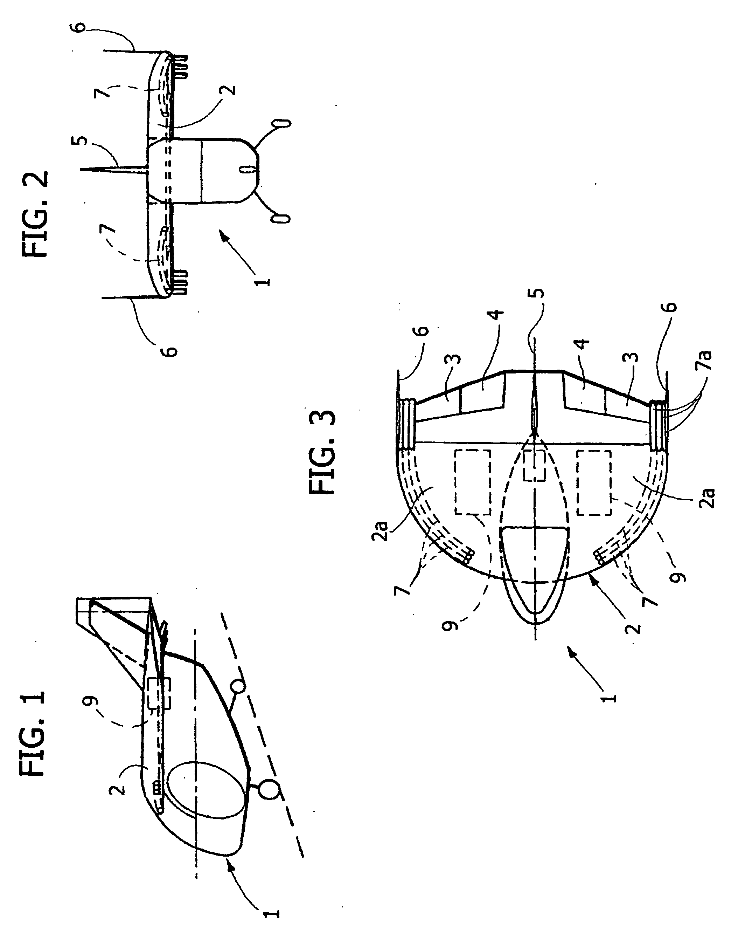

figures 1, 2 and 3 show an elevational side view, a front view and a plan view of one embodiment of an aircraft according to the invention,
figure 4 is a diagrammatic view of a plurality of detonation tubes provided in the aircraft of figures 1-3,
figure 5 is an end view of the assembly of figure 4, and,
figure 6 shows the detail of one end portion of a detonation tube.

The annexed drawings show an example of the application of invention to a small aircraft having an "all-wing" configuration. In a real embodiment, this aircraft may have a wing span around 3 m and a wing surface around 8 m². The aircraft can be designed for piloted transportation or as an unmanned aircraft, for transportation of small loads. In the shown configuration, the aircraft comprises a fuselage 1 and a wing structure 2 formed by two wings 2a which in the illustrated embodiment have a leading edge having, when viewed from above, a profile substantially in form of an arch of a circle. At its trailing edge, the wing 2 is provided both with ailerons 3 and with horizontal tail surfaces 4. A vertical tail surface 5 is further provided with an associated movable rudder, along with two vertical surfaces 6 at the ends of the wings 2a.

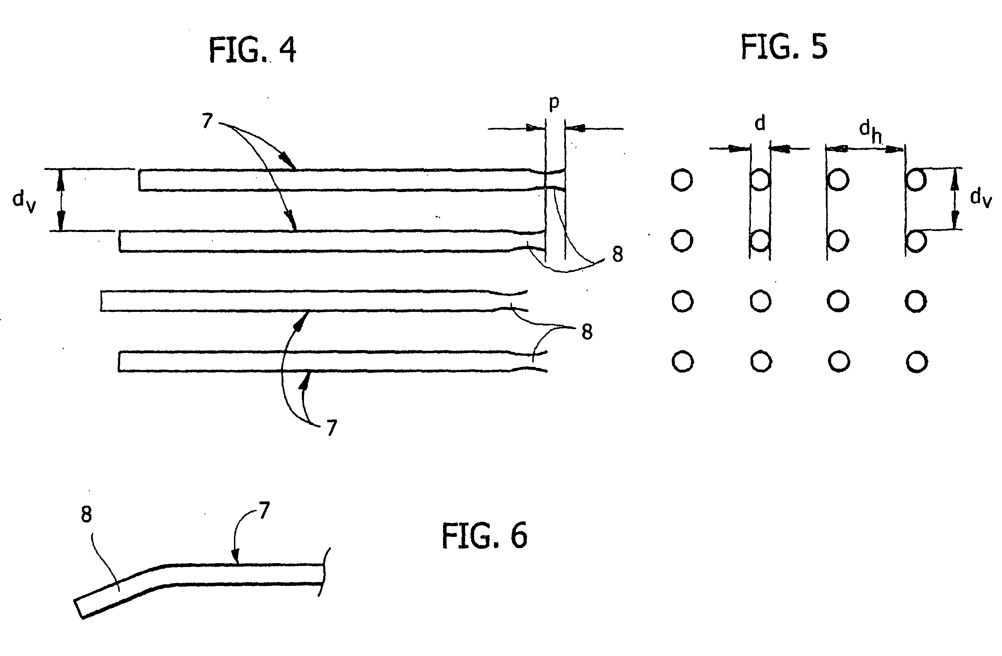

As diagrammatically shown in the drawings, within the two wings 2a there are arranged two groups of PDEs 7 which in the illustrated example have a curved configuration so as to follow the curved configuration, viewed from above, of the leading edge of the wing 2. Each PDE is constituted by a detonation tube having a terminal portion 7a arranged outside of the aircraft body, with an end nozzle 8 (figure 4).

Figure 4 shows, for sake of simplicity, a plurality of detonation tubes 7 arranged on the aircraft according to the invention, as being straight and parallel. However, in the real embodiment, each detonation tube 7 may be curved and may have an end portion forming the nozzle 8 which on its turn may be curved (see figure 6) or in any case can be directed along a direction which can be different from that of the other nozzles.

The annexed drawings do not show the details of the structure of each detonation tube, the injectors for the fuel and the oxygen or air which are associated thereto, as well as the means for controlling these injectors and the means for initiating the detonation combustion within the detonation chamber defined by each tube. All the above mentioned details of construction can be made in any known way, and do not fall, taken alone, within the scope of the present invention. On the other hand, the deletion of these details from the drawings renders the latter simpler and easier to understand.

As already indicated in the foregoing, the various detonation tubes which are provided on the aircraft have their nozzles directed along different directions and are controlled independently from each other, or in groups, in a selective manner, to adjust the amount of the thrust, as well as to obtain the desired components of the thrust along the horizontal and vertical directions in the various flight regimes (vertical and sub-vertical take-off/landing, cruising regime) and for having extra stability and manoeuvrability, particularly in flight at low speeds.

As also indicated in the foregoing, at design stage, the diameter d (figure 5) of each tube, the distance dₕ between adjacent tubes along the horizontal direction, and the distance dᵥ along the vertical direction are selected also in order to obtain a minimum level of noise by exploiting the interference between the acoustic waves caused by the detonations within the tubes. Under this respect, it is particularly important that the nozzles 8 are arranged at positions offset along the longitudinal direction of the tubes relative to each other, the amount p of this offset (figure 4) being also selected as a function of the noise reduction features which are desired. The direction of each nozzle 8 is identified by the angles formed by the longitudinal axis of the nozzles 8 with respect to a reference system and also these angles can be varied at design stage in order to obtain the required characteristics. Also the positioning of the tubes at different areas of the aircraft and above all the provision of the nozzles of the tubes at different areas of the aircraft give the possibility of providing an aircraft with high efficiency and stability.

In the case of the specific embodiment shown, two further propulsion engines 9 can be provided, of conventional type, for example two propeller engines, for the cruising regime.

In a real embodiment, the two groups of detonation tubes 7 provided in the wings may have about 30-50 tubes each, for example 40 tubes, having a diameter of about 1-1.5 cm and a length of about 150-300 cm.

According to a further feature, the tubes are preferably made of carbon, both for reduction of weight and for a better heat dissipation.

A further preferred feature lies in the provision of one or more air compressors for compressing air to the value of pressure required before feeding this air to the detonation tubes.

Naturally, while the principle of the invention remains the same, the details of construction and the embodiments may widely vary with respect to what has been described and shown purely by way of example, without departing from the scope of the claims.

## Claims

1. Aircraft, particularly a small aircraft, either of the manned or unmanned type, provided with a propulsion system including a plurality of Pulse Detonation Engines (PDEs) each comprising a detonation tube (7) with a closed end, defining a detonation chamber, a nozzle (8) at the opposite end and means for feeding air or oxygen and a fuel within the detonation chamber for initiating a combustion under detonation regime within said chamber,
wherein said detonation tubes (7) are arranged within the wings (2a) of the aircraft for at least a prevailing portion of their length,
**characterized in that** said pulse detonation tubes (7) are arranged in groups extending adjacent the leading edges of the two wings (2a) of the aircraft according to a curved configuration, following a curved or inclined configuration of the leading edge of the wings (2a) of the aircraft, when viewed from above,
wherein the pulse detonation tubes (7) of each group are arranged substantially parallel to each other and spaced apart from each other both in a horizontal and in a vertical direction.

2. Aircraft according to claim 1, **characterized in that** there are provided means for controlling the operation of said detonation tubes (7) or of groups of said detonation tubes (7), independently from each other, so that it possible in particular to select the tubes which are active to adjust the amount of thrust in order to obtain extra capability of controlling the aircraft.

3. Aircraft according to any of the previous claims, **characterized in that** the nozzles (8) of the detonation tube (7) are oriented along different directions to provide a capability of flight under different regimes, including a vertical or sub-vertical take-off/landing regime and a cruising regime.

4. Aircraft according to any of the previous claims, **characterized in that** the nozzles (8) of the detonation tube (7) are off-set with respect to each other along the longitudinal direction of the tubes.

5. Aircraft according to any of the previous claims, **characterized in that** it has a wing span in the order of 3 meters.

6. Aircraft according to claim 5, **characterized in that** each wing (2a) of the aircraft is provided with a number of detonation tubes between 30 and 50.

7. Aircraft according to claim 5, **characterized in that** each tube has a length in the order of 150-300 cm and a diameter in the order of 1-1,5 cm.

8. Aircraft according to claim 1, **characterized in that** it has a wing surface in the order of 8 square meters.

9. Aircraft according to claim 1, **characterized in that** the means for feeding air or oxygen are able to inject air or oxygen under pressure.

10. Aircraft according to claim 9, **characterized in that** at least one compressor is provided on the aircraft for compressing the air to be fed to the detonation tubes (7) up to the required value of pressure.

## Patentansprüche

1. Flugzeug, speziell kleines Flugzeug, entweder von der bemannten oder unbemannten Art, bereitgestellt mit einem Vortriebssystem, das eine Vielzahl von pulsierten Detonationskraftmaschinen enthält (PDEs), von denen jede eine Detonationsröhre (7) aufweist, mit einem geschlossenen Ende, die eine Detonationskammer vorgibt, eine Düse (8) am gegenüberliegenden Ende und Mittel zur Zufuhr von Luft oder Sauerstoff und einem Treibstoff innerhalb der Detonationskammer zur Einleitung einer Verbrennung unter Detonationsregime innerhalb dieser Kammer,
worin diese Detonationsröhren (7) innerhalb der Tragflächen (2a) des Flugzeugs zu wenigstens einem überwiegenden Teil ihrer Länge angeordnet sind,
**dadurch gekennzeichnet, dass** die pulsierten Detonationsröhren (7) in Gruppen angeordnet sind, die sich benachbart den Führungskanten der zwei Tragflächen (2a) des Flugzeugs entsprechend einer gekrümmten Konfiguration erstrecken, die einer gekrümmten oder geneigten Konfiguration der Führungskante der Tragflächen (2a) des Flugzeugs folgt, wenn von oben betrachtet,
worin die Pulsdetonationsröhren (7) jeder Gruppe im Wesentlichen parallel zueinander und beabstandet voneinander sowohl in einer horizontalen als auch in einer vertikalen Richtung angeordnet sind.

2. Flugzeug gemäß Anspruch 1, **dadurch gekennzeichnet, dass** Mittel bereitgestellt sind zur Steuerung des Betriebs der Detonationsröhren (7) oder Gruppen von Detonationsröhren (7), unabhängig voneinander, so dass es speziell möglich ist die Röhren auszuwählen, welche aktiv sind, um die Schubmenge zu justieren, um eine spezielle Möglichkeit zur Steuerung des Flugzeugs zu erhalten.

3. Flugzeug gemäß irgendeinem der vorangehenden Ansprüche, **dadurch gekennzeichnet, dass** die Düsen (8) der Detonationsröhre (7) entlang verschiedenen Richtungen ausgerichtet sind, um die Möglichkeit des Flugs unter verschiedenen Regimes bereitzustellen, einschließlich eines vertikalen oder subvertikalen Abhebe- oder Landeregimes und eines Reiseflugregimes.

4. Flugzeug gemäß irgendeinem der vorangehenden Ansprüche, **dadurch gekennzeichnet, dass** die Düsen (8) der Detonationsröhre (7) in Bezug aufeinander entlang der longitudinalen Richtung der Röhren versetzt sind.

5. Flugzeug gemäß irgendeinem der vorangehenden Ansprüche, **dadurch gekennzeichnet, dass** es eine Tragflächenspannweite in der Größe von drei Metern aufweist.

6. Flugzeug gemäß Anspruch 5, **dadurch gekennzeichnet, dass** jede Tragfläche (2a) des Flugzeugs mit einer Anzahl von Detonationsröhren zwischen 30 und 50 ausgestattet ist.

7. Flugzeug gemäß Anspruch 5, **dadurch gekennzeichnet, dass** jede Röhre eine Länge in der Größenordnung von 150 bis 300 cm aufweist und einen Durchmesser in der Größenordnung von 1 bis 1,5 cm.

8. Flugzeug gemäß Anspruch 1, **dadurch gekennzeichnet, dass** es eine Tragflächenoberfläche in der Größenordnung von 8 m² aufweist.

9. Flugzeug gemäß Anspruch 1, **dadurch gekennzeichnet, dass** die Mittel zur Zufuhr von Luft oder Sauerstoff dazu in der Lage sind, Luft oder Sauerstoff unter Druck einzuspritzen.

10. Flugzeug gemäß Anspruch 9, **dadurch gekennzeichnet, dass** wenigstens ein Kompressor im Flugzeug bereitgestellt ist, zum Komprimieren der den Detonationsröhren (7) zuzuführenden Luft auf das benötigte Druckniveau.

## Revendications

1. Avion, particulièrement un petit avion, du type avec ou sans pilote, muni d'un système de propulsion comprenant une pluralité de moteurs à explosion à impulsion (PDE), chacun comprenant un tube à explosion (7) ayant une extrémité fermée, définissant une chambre à explosion, une buse (8) au niveau de l'extrémité opposée et un moyen pour amener de l'air ou de l'oxygène et un carburant à l'intérieur de la chambre à explosion pour amorcer une combustion sous le régime d'explosion à l'intérieur de ladite chambre,
dans lequel lesdits tubes à explosion (7) sont agencés à l'intérieur des ailes (2a) de l'avion sur au moins une majeure partie de leur longueur,
**caractérisé en ce que** lesdits tubes à explosion à impulsion (7) sont agencés en groupes s'étendant de façon adjacente aux bords d'attaque des deux ailes (2a) de l'avion selon une configuration courbée, à la suite d'une configuration courbée ou inclinée du bord d'attaque des ailes (2a) de l'avion, lorsque l'on regarde par le dessus,
dans lequel les tubes à explosion à impulsion (7) de chaque groupe sont agencés sensiblement parallèlement les uns aux autres et sont espacés les uns des autres tant dans la direction horizontale que verticale.

2. Avion selon la revendication 1, **caractérisé en ce qu'**il y a un moyen pour commander le fonctionnement desdits tubes à explosion (7) ou desdits groupes de tubes à explosion (7), indépendamment les uns des autres, de sorte qu'il est possible de sélectionner en particulier les tubes qui sont actifs pour régler la quantité de poussée afin d'obtenir une capacité supplémentaire pour commander l'avion.

3. Avion selon l'une quelconque des revendications précédentes, **caractérisé en ce que** les buses (8) du tube à explosion (7) sont orientées le long de directions différentes pour procurer une capacité de vol sous des régimes différents, y compris un régime de décollage / atterrissage vertical ou sous-vertical et un régime de croisière.

4. Avion selon l'une quelconque des revendications précédentes, **caractérisé en ce que** les buses (8) du tube à explosion (7) sont décalées les unes par rapport aux autres le long de la direction longitudinale des tubés.

5. Avion selon l'une quelconque des revendications précédentes, **caractérisé en ce qu'**il a une envergure d'environ 3 mètres.

6. Avion selon la revendication 5, **caractérisé en ce que** chaque aile (2a) de l'avion est munie de 30 à 50 tubes à explosion.

7. Avion selon la revendication 5, **caractérisé en ce que** chaque tube a une longueur d'environ 150 à 300 cm et un diamètre d'environ 1 à 1,5 cm.

8. Avion selon la revendication 1, **caractérisé en ce qu'**il a une surface d'aile d'environ 8 mètres carrés.

9. Avion selon la revendication 1, **caractérisé en ce que** le moyen pour amener l'air ou l'oxygène est susceptible d'injecter de l'air ou de l'oxygène sous pression.

10. Avion selon la revendication 9, **caractérisé en ce qu'**au moins un compresseur est prévu sur l'avion pour comprimer l'air à amener aux tubes à explosion (7) jusqu'à la valeur de pression exigée.
